(19) Europäisches Patentamt
European Patent Office
Office européen des brevets

(11) Veröffentlichungsnummer: **0 451 359 A1**

# (12) EUROPÄISCHE PATENTANMELDUNG

(21) Anmeldenummer: **90124694.2**

(22) Anmeldetag: **19.12.90**

(51) Int. Cl.5: **C08K 5/00**, C08L 81/02

(30) Priorität: **24.03.90 DE 4009558**

(43) Veröffentlichungstag der Anmeldung:
**16.10.91 Patentblatt 91/42**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Uerdingen, Walter, Dr.**
**Humperdinckstrasse 41**
**W-5090 Leverkusen 1(DE)**
Erfinder: **Kraft, Klaus, Dr.**
**Doerperhofstrasse 15**
**W-4150 Krefeld 1(DE)**
Erfinder: **Heinz, Hans-Detlef, Dr.**
**Breslauer Strasse 31**
**W-4150 Krefeld 1(DE)**
Erfinder: **Wehnert, Wolfgang, Dr.**
**Bodelschwinghstrasse 14**
**W-4150 Krefeld 1(DE)**

## (54) Mischungen aus Polyarylensulfiden, Glasfasern und Nitroaryloxyheterocyclen.

(57) Die Erfindung betrifft Mischungen aus Polyarylensulfiden, Nitroaryloxyheterocyclen und gegebenenfalls anderen Zusätzen. Die Mischungen zeichnen sich durch gute mechanische Eigenschaften aus.

EP 0 451 359 A1

Die Erfindung betrifft Mischungen aus Polyarylensulfiden, Nitroaryloxyheterocyclen und gegebenenfalls anderen Zusätzen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bislang Duroplasten vorbehalten waren.

PPS hat mechanische Eigenschaften, die für einige Anwendungen z.B. im Spritzgußbereich unzureichend sind. Insbesondere sind Biege- oder Zugfestigkeit, Randfaserdehnung, Schlagzähigkeit und Elastizitätsmodul für die Praxis häufig nicht ausreichend. Es hat sich daher als Vorteil erwiesen, PPS z.B. durch Abmischung mit anderen Thermoplasten, z.B. mit Polycarbonaten in den genannten Eigenschaften zu verbessern (z.B. JP-A 51-59952, EP-A 104 543, US-A 4 021 596).

Für bestimmte Anwendungsgebiete ist das Eigenschaftsprofil derartiger Abmischungen jedoch nicht immer ganz befriedigend.

Es ist bekannt, daß PAS sich durch Abmischung mit Maleinimiden in seinen Eigenschaften modifizieren läßt. Meist wird dabei eine Verzweigung von PPS bewirkt, da z.B. PPS unter oxidativen Bedingungen mit Maleinimiden umgesetzt wird (JP-A 021 876) oder PPS mit Verbindungen umgesetzt wird, die mindestens drei Maleinimidgruppen und einen Triazinring enthalten (z.B. JP-A 202 162, EP-A 105 639).

Wünschenswert wären daher Additive, die oxidierende und vernetzende Eigenschaften in einem Molekül vereinen und die mechanischen Eigenschaften von PAS-Mischungen verbessern.

Es wurde nun gefunden, daß Nitroaryloxytriazine die mechanischen Eigenschaften von PAS, vorzugsweise PPS verbessern.

Gegenstand der Erfindung sind daher Mischung aus

A) 99,9 bis 15 Gew.-%, bevorzugt 90-20 Gew.-%, Polyarylensulfiden, bevorzugt PPS,

B) 0,1-10 Gew.-%, bevorzugt 0,5-5 Gew.-% eines Nitroaryloxyheterocyclus, hergestellt in an sich bekannter Weise durch Umsetzung von

a) Heterocyclen der Formel (I)-(VIII),

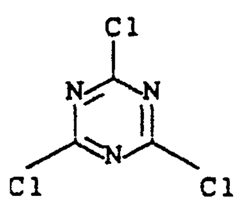

(I),

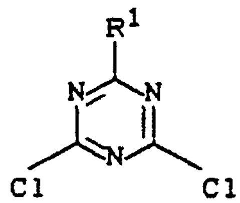

(II),

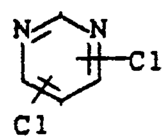

(III),

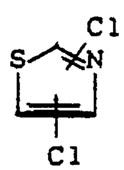

(IV),

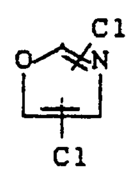

(V),

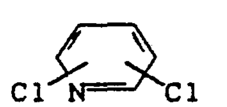

(VI),

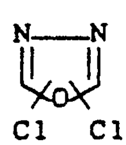

(VII),

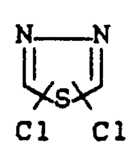

(VIII),

bevorzugt der Formel I,

wobei

$R^1$ für einen $C_6$-$C_{24}$-Aryl-, $C_6$-$C_{24}$-Aryloxy-, $C_1$-$C_6$-Alkyl- oder $C_1$-$C_6$-Alkoxyrest steht, mit

b) Nitroaryloxyverbindungen der Formel (IX)

$(NO_2)_x$-Ar-$(OH)_y$ (IX),

wobei
Ar ein $C_6$-$C_{24}$-aromatischer Rest, vorzugsweise ein $C_6$-aromatischer Rest ist und
x und y für 1 oder 2, bevorzugt für 1 stehen unter der Maßgabe, daß das Verhältnis Cl zu OH-Gruppen im Eduktgemisch zwischen 0,9:1 und 1,1:1 liegt und
daß im entstehenden Produkt oder Produktgemisch mindestens durchschnittlich zwei Nitroaryloxyeinheiten pro Molekül vorhanden sind,
wobei der entstehende Chlorwasserstoff vorzugsweise durch Basen abgefangen wird und
C) 0-84,9 Gew.-%, bevorzugt 9,9-79,9 Gew.-%, mineralische Füll- und Verstärkungsstoffe, die bevorzugt mit Aminosilan-Haftvermittlern geschlichtet sind.

Die Herstellung der erfindungsgemäßen Additive B) kann z.B. analog Berichte 18, 765 erfolgen.

Beispiele für die Additive B) sind:
2,4,6-Tris-(4-nitrophenoxy)-1,3,5-triazin,
2,4,6-Tris-(2-nitrophenoxy)-1,3,5-triazin.

Mineralische Füllstoffe oder Zusatzstoffe sind z.B. Glimmer, Microtalk, Talkum, Quarzmehl, Metalloxide und -sulfide, wie z.B. $TiO_2$, ZnO, ZnS, Graphit, Ruß, Fasern aus z.B. Quarz und Kohle, Carbonate wie $MgCO_3$, $CaCO_3$ oder Sulfate, z.B. $CaSO_4$, $BaSO_4$, Glasfasern, Glaskugeln usw.

Beispiele

Die Herstellung der erfindungsgemäßen Mischungen erfolgte auf einem Doppelwellenextruder ZSK 32 von Werner und Pfleiderer bei 320 °C.

Das verwendendete PPS wies eine Schmelzviskosität von 59 PA.s (306 °C), Schubspannung = 1.000 $s^{-1}$ auf und wurde nach EP-A 171 021 hergestellt.

Als Glasfasern wurde die geschlichtete Schnittglasfaser Bayer CS 7916® zu 40 Gew.-% zusammen mit 0,5 Gew.-% Microtalk eingesetzt. Der Haftvermittler der Glasfaser ist ein Aminosilan.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biege-E-Modul und Schlagzähigkeit $a_n$ (reversed notched ISO 180) untersucht.

Vergleichsbeisiel 1

Gemischt wurden 59,5 % PPS mit den Füllstoffen.

Beispiel 1

Gemischt wurden 59 % PPS und 1 % Tris-(4-nitro-phenoxy)-1,3,5-triazin mit den Füllstoffen.

| Beispiel | Biegefestigkeit MPa | Randfaserdehnung % | E-Modul MPa | Izod-Schlagzähigkeit $kJ/m^2$ |
|---|---|---|---|---|
| Vgl. 1 | 249 | 1,86 | 13.060 | 28,5 |
| 1 | 311 | 2,39 | 13.402 | 44,1 |

**Patentansprüche**

1. Mischungen aus
A) 99,9 bis 15 Gew.-%, bevorzugt 90-20 Gew.-%, Polyarylensulfiden, bevorzugt PPS,
B) 0,1-10 Gew.-%, bevorzugt 0,5-5 Gew.-% eines Nitroaryloxyheterocyclus, hergestellt in an sich bekannter Weise durch Umsetzung von
a) Heterocyclen der Formeln (I)-(VIII),

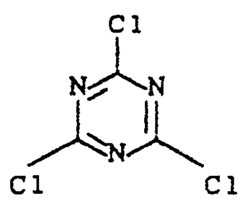

(I),

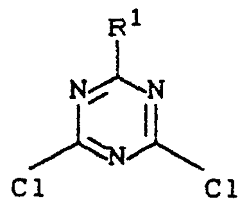

(II),

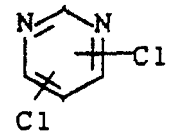

(III),

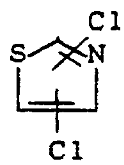

(IV),

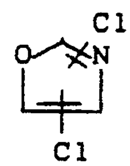

(V),

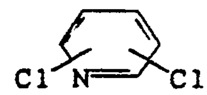

(VI),

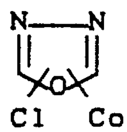

(VII),

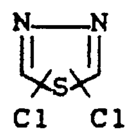

(VIII),

wobei

$R^1$ für einen Aryl-, Aryloxy-, Alkyl- oder Alkoxyrest steht, mit

b) Nitroaryloxyverbindungen der Formel (IX)

$(NO_2)_x$-Ar-$(OH)_y$ (IX),

wobei

Ar ein aromatischer Rest, vorzugsweise ein $C_6$-aromatischer Rest ist und x und y für 1 oder 2 stehen und/oder Bisphenolen unter der Maßgabe, daß das Verhältnis $C_2$ zu OH-Gruppen im Eduktgemisch zwischen 0,9:1 und 1,1:1 liegt und

daß im entstehenden Produkt oder Produktgemisch mindestens durchschnittlich zwei Nitroaryloxyeinheiten pro Molekül vorhanden sind,

wobei der entstehende Chlorwasserstoff vorzugsweise durch Basen abgefangen wird und

C) 0-84,9 Gew.-% mineralische Füll- und Verstärkungsstoffe.

**2.** Verwendung der Mischungen aus Anspruch 1 zur Herstellung geformter Körper.

Europäisches Patentamt

# EUROPÄISCHER RECHERCHENBERICHT

Nummer der Anmeldung

EP 90 12 4694

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 303 108 (HOECHST AG)<br>* Beispiele *<br>- - - | 1-2 | C 08 K 5/00<br>C 08 L 81/02 |
| A | US-A-4 548 971 (MARTINOVITCH ET AL)<br>* Spalte 2, Zeilen 30 - 67 *<br>- - - - - | 1-2 | |

| RECHERCHIERTE SACHGEBIETE (Int. Cl.5) |
|---|
| C 08 K<br>C 08 L |

Der vorliegende Recherchenbericht wurde für alle Patentansprüche erstellt

| Recherchenort | Abschlußdatum der Recherche | Prüfer |
|---|---|---|
| Den Haag | 12 Juli 91 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument